# EUROPÄISCHE PATENTSCHRIFT

(11) **EP 0 650 624 B1**
(45) Veröffentlichungstag und Bekanntmachung des Hinweises auf die Patenterteilung: **15.05.1996**
(21) Anmeldenummer: 93915864.8
(22) Anmeldetag: 09.07.1993
(51) Int. Cl.: G07F 17/32, G07F 7/08

(54) **SYSTEM UND VERFAHREN ZUM AUTOMATISCHEN ABWICKELN VON TURNIEREN**
PROCESS AND SYSTEM FOR AUTOMATED RUNNING OF SPORTS CONTESTS
PROCEDE ET SYSTEME POUR LE DEROULEMENT DE COMPETITIONS SPORTIVES

(30) Priorität: 11.07.1992 DE 4222896
(43) Veröffentlichungstag der Anmeldung: 03.05.1995
(73) Patentinhaber: Eiba, Peter, D-86343 Königsbrunn (DE)
(72) Erfinder: Eiba, Peter, D-86343 Königsbrunn (DE)
(74) Vertreter: Fiener, Josef
(86) Internationale Anmeldenummer: EP9301801
(87) Internationale Veröffentlichungsnummer: WO9401839

(56) Entgegenhaltungen:
- FR-A- 2 502 815
- US-A- 4 237 376
- US-A- 4 268 744
- US-A- 4 319 131
- US-A- 4 367 526
- US-A- 4 575 622
- US-A- 4 709 136

## Beschreibung

Die Erfindung betrifft ein System und ein Verfahren zum automatischen Abwickeln von Turnieren.

Bei der Abwicklung von Turnieren sind selbst bei Einsatz eines mit einem Turnierprogramm ausgestatteten PC-Geräts ein oder mehrere Personen als Turnier- oder Spielleiter erforderlich, die die Daten der Spieler vor Beginn des Turniers erfassen, die Zwischenergebnisse korrekt feststellen und in das PC-Gerät eingeben und jeweils die neuen Turnierrunden vom PC-Gerät zusammenstellen lassen.

Die DE 35 22 136 beschreibt ein Spielsystem nach dem Oberbegriff des Anspruches 1 unter Verwendung von Videospielgeräten auf überörtlicher (regionaler, nationaler oder sogar internationaler) Ebene. Hierbei werden mehrere Magnetkartenleser für die jeweilige Teilnehmeridentifikation verwendet. Die Videospielgeräte sind über Telefonleitung und Modem zur Kreditüberprüfung an einen Zentralrechner angeschlossen. Dieser Zentralrechner ermittelt auch jeweils im Vergleich zu den anderen Spielergebnissen der übrigen Teilnehmer das beste Spielergebnis und teilt somit den entsprechenden Gewinn oder Verlust zu.

Jedoch muß zunächst vom Teilnehmer eine Karte mit einem entsprechenden Kredit erworben werden. Damit ist jedoch eine Überwachungsperson erforderlich, die jedem Teilnehmer eine persönliche Ziffer zuteilt und den Magnetstreifen mittels eines Kartenkodierers kodiert. Somit arbeitet dieses gezeigte System nicht ohne Bedienperson. Entsprechendes gilt für die in der US-A-4,268,744 und US-A-4,319,131 beschriebenen Systeme zur Speicherung und Kontrolle von erzielten Spielresultaten (z.B. Handicaps beim Golf).

Die DE 33 29 847 befaßt sich mit einem Belegungssystem für Tennisplätze und ähnliche Sportplätze. Hierbei wird zwar ebenfalls eine Identifikationskarte für den jeweiligen Benutzer verwendet, jedoch sind noch umfangreiche Dateneingaben über die Tastatur oder Funktionstasten erforderlich, was zu Eingabefehlern führen kann.

Die DE 28 54 229 zeigt ein ähnliches Belegungssystem für Spielplätze, Tennishallen und dgl., wobei auch die Möglichkeit der Einziehung der Karte mittels eines "Kartenschluckers" angegeben ist. Mit der Ermittlung des Gewinners/Verlierers und der Abwicklung eines Turniers hat dieses Dokument jedoch nichts zu tun.

Die DD 290 073 beschreibt weiterhin eine Anzeigetafel für Zweikampfsportarten, wobei die Dateneingabe mittels Handgeräten an dem jeweiligen Wettkampfplatz beschrieben ist. Die Auswertung erfolgt dann durch Datenübermittlung aus den Handgeräten in den Zentralrechner, beispielsweise mittels Floppydisk. Darüberhinaus ergibt diese Druckschrift auch keinerlei Anhaltspunkte, eine Turnierabwicklung, also im wesentlichen das Vorrücken in die nächste Turnierrunde zu steuern.

Aufgabe der Erfindung ist es, ein System und ein Verfahren zur automatischen Abwicklung von Turnieren anzugeben, das absichtliche oder unabsichtliche Fehlbedienungen ausschließt.

Das erfindungsgemäße System besitzt die Merkmale des Patentanspruchs 1, das erfindungsgemäße Verfahren die Merkmale des Anspruchs 14.

Bevorzugte Weiterbildungen des erfindungsgemäßen Systems bzw. Verfahrens sind in den übrigen Ansprüchen gekennzeichnet.

Da die Eingabe der notwendigen Informationen mit Hilfe maschinell lesbarer Datenträger erfolgt, d. h., daß praktisch keine Tastatur-Dateneingabe vorgesehen ist, werden Eingabefehler vermieden und es wird jegliche Manipulation unterbunden.

Das erfindungsgemäße System bietet ferner weitere Sicherheit dadurch, daß eine gewisse Ablauffolge beim Einsetzen der Datenträger in das Lesegerät eingehalten werden muß.

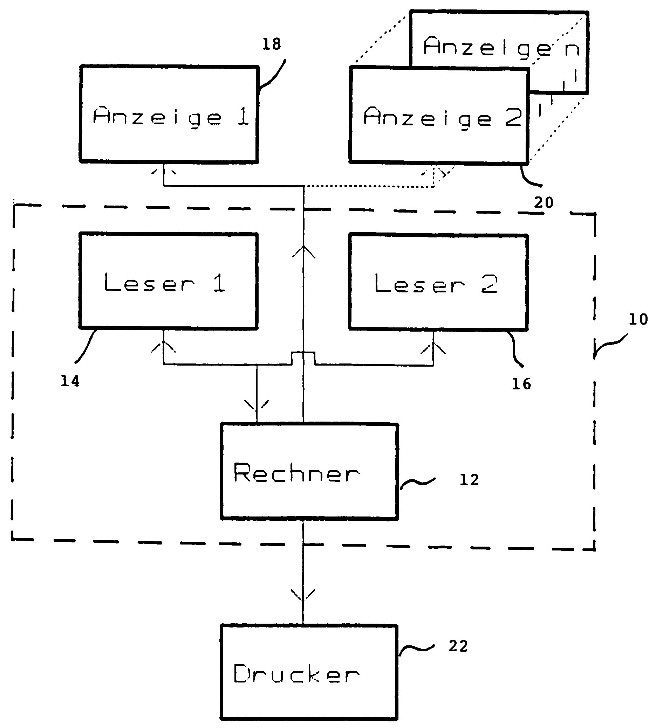

Weitere Merkmale und Vorteile des erfindungsgemäßen Systems ergeben sich aus der nachfolgenden Beschreibung eines Ausführungsbeispiels anhand der Zeichnung, die ein schematisches Diagramm des Ausführungsbeispiels zeigt.

Ein Rechner 12 mit einem Mikroprozessor wird als Zentraleinheit verwendet zur Steuerung der verschiedenen Vorgänge und Abläufe. Der Rechner 12 steht mit einem, vorzugsweise jedoch mit zwei Lesern 14, 16 in Verbindung, die zur Eingabe von Daten und Programminformationen dienen, die auf einem maschinell lesbaren Datenträger enthalten sind, wie einer Chipkarte, einer Magnetstreifenkarte, einer Lochkarte oder einer optisch lesbaren Karte. Auch andere Formen von maschinell lesbaren Datenträgern, die in eine entsprechende Lesevorrichtung einführbar sind, kommen in Frage, etwa die sogenannten "elektronischen Schlüssel".

Die vom Rechner 12 aufgenommenen und/oder verarbeiteten Informationen werden in einer Speichervorrichtung (RAM) gespeichert und über eine Anzeige 18 visuell dargestellt. Weitere Anzeigen 20 können parallel dazu vorgesehen sein.

An den Rechner 12 läßt sich ferner ein Drucker 22 anschließen.

Vorzugsweise sind der Rechner 12 und der bzw. die Leser 14, 16 in einem stabilen Gehäuse 10 untergebracht, das lediglich für jeden Leser einen Schlitz zur Einführung der Datenträgerkarte und einen Schalter zum Einschalten des Gerätes aufweist. Ein wesentliches Merkmal der Erfindung besteht darin, daß sämtliche erforderliche Eingaben über die Leser 14, 16 erfolgen. Hierzu ist einmal je eine Systemkarte pro Turnierart vorgesehen, auf der das vom Rechner für ein bestimmtes Turnier durchzuführende Programm gespeichert ist. Alternativ dazu können die Programme für die verschiedenen Turnierarten auch im Rechner in einem ROM Speicher gespeichert sein, wobei dann mittels der Systemkarte unter Ablesen entsprechender Parameter das Programm für die gewünsche Turnierart ausgerufen wird. Als Turnierarten kommen beispielsweise K.O.-System, Doppel-K.O.-System, Vollrundenspiel usw. in Frage.

Eine zweite Art von Karten sind die Teilnehmerkarten, die entsprechende Informationen zur Identifizierung des Teilnehmers enthalten, wie Name, Club, Mitgliedsnummer, Qualifikation, Geburtsdatum, Wohnort etc.. Ist ein Teilnehmer kein Clubmitglied, dann erhält er eine Gästekarte, die mit einem beliebigen Symbol versehen ist, das als Identifikation gespeichert ist.

Vor Beginn eines Turniers wird nach Einschalten des Gerätes zuerst die gewünschte Systemkarte in den Schlitz des Lesers 14 oder (falls vorhanden) des Lesers 16 eingesteckt. Hierbei übernimmt der Rechner 12 das dem gewünschten Turnier entsprechende Programm. Es ist zu beachten, daß beim Einführen einer anderen Karte, etwa einer Teilnehmerkarte, anstelle der Systemkarte die Teilnehmerkarte wieder ausgeworfen wird. Grundsätzlich prüft das Gerät vor jedem Ablaufschritt, ob die richtige(n) Karte(n) eingesetzt ist bzw. sind, bzw. in der richtigen Reihenfolge eingeführt werden. Ist dies nicht der Fall, dann wird die eingeführte Karte ausgeworfen. Bei mehrmaligen Fehlversuchen geht das System in den Anfangszustand zurück.

Nach Übernahme des Programms gibt der Leser 14 (bzw. 16) die Systemkarte wieder frei, worauf nun nacheinander die Teilnehmerkarten aller Teilnehmer eingeführt und die darauf enthaltenen Informationen in den Rechner 12 übernommen werden. Dieser speichert nun die Teilnehmerinformationen in einer Datei ggfs. sortiert nach gewünschten vom speziellen Programm vorgegebenen Gesichtspunkten und bringt diese auf der (oder den) Anzeige(n) zur Darstellung.

Abhängig von der gewünschten Turnierart werden dann beispielsweise mittels eines Zufallgenerators die entsprechenden Paarungen zusammengestellt und zur Anzeige gebracht. Es sei darauf hingewiesen, daß Programme für derartige Paarungsbildungen im Handel erhältlich sind. Die Spiele können nun beginnen.

Zur eindeutigen Eingabe eines Spielergebnisses ist es erfindungsgemäß erforderlich, daß beide Spieler ihre Karten in das System einführen. Die bevorzugte erfindungsgemäße Lösung besteht darin, daß zwei Leser 14, 16 vorgesehen sind, und daß der Gewinner seine Karte in den Leser 14 und der Verlierer seine Karte in den Leser 16 einführt. Nur bei gleichzeitigem Vorhandensein beider Karten erkennt das System die Gewinneingabe an und speichert das entsprechende Ergebnis. Bei Spielen mit Unentschieden könnte ein derartiges Remis beispielsweise durch nochmaliges Einführen der Teilnehmerkarte in umgekehrter Konfiguration dem System angezeigt werden.

Ist bei einer beschränkten Anordnung nur ein Leser vorgesehen, so kann das Programm derart ausgestaltet sein, daß es die erste Karte als Gewinn aufnimmt, aber nur dann, wenn die zweite Karte, nämlich die des Verlierers unmittelbar nach der Karte des Gewinners, etwa innerhalb eines kurzen Zeitrahmens von beispielsweise einer Minute nach der ersten Karte eingeführt wird.

Nach jeder Aufnahme eines Ergebnisses kann der Rechner die entsprechenden Anzeigen auf den neuesten Stand bringen.

Erkennt der Rechner, daß alle Ergebnisse einer Runde eingegeben sind, so zeigt er das Endergebnis an und berechnet je nach Vorliegen der Turnierart die nächsten Paarungen und bringt diese zur Anzeige.

Will ein Teilnehmer ausscheiden oder wird er disqualifiziert, dann dient eine Ausschlußkarte dazu, unter gemeinsamem Einführen mit der entsprechenden Teilnehmerkarte, also parallel zueinander in die beiden Leser 14, 16 oder kurz nacheinander bei nur einem Leser 14, im Rechner die Löschung des Teilnehmers auszulösen.

Bei der Eingabe der Spielergebnisse prüft der Rechner ebenfalls, ob nur Teilnehmerkarten eingeführt sind und ob es auch die Teilnehmerkarten der jeweiligen Paarung sind, für die das Ergebnis eingebracht werden soll.

Es sei darauf hingewiesen, daß die an den Rechner angeschlossene Anzeige 18 auch dazu dienen kann, die jeweils auszuführenden Schritte anzugeben, nämlich, welche Karte in welchen Schlitz zu welchem Zeitpunkt einzuführen ist. Die Anzeige 18 ist entweder in dem gemeinsamen Gehäuse untergebracht oder an einer gut sichtbaren Stelle außerhalb desselben angeordnet. Bei Beendigung eines Turniers oder einer Runde können die Ergebnisse auch über den Drucker 22 ausgegeben werden.

Nach Beendigung eines Turniers bleiben die Ergebnisse eine bestimmte Zeit angezeigt, worauf sie im Rechner gelöscht werden. Eine derartige Löschung erfolgt auch, wenn innerhalb einer bestimmten Zeit keine Eingaben vorgenommen werden.

Als Alternative zur Darstellung von Ablaufinformationen können diese auch als Leuchtanzeige neben dem jeweiligen Kartenschlitz wiedergegeben werden. Auch besteht die Möglichkeit, auf der Außenseite des Gehäuses einen Wählschalter oder dgl. anzubringen, der von einem Vorgang zum anderen weitergeschaltet wird, also von Eingabe der Systemkarte, Eingabe der Teilnehmer usw.. Ferner kann ein Minimum an Tasten vorgesehen sein, um bestimmte Vorgaben in das Gerät einzugeben oder ganz bestimmte Vorgänge auszulösen. Die Aktivierung derartiger Eingabevorrichtungen kann wiederum eng begrenzt sein, etwa dadurch, daß eine oder zwei bestimmte Karten in das Gerät eingesetzt sind.

Die bevorzugte Ausbildung des erfindungsgemäßen Systems verringert jedoch die Fehler- und Manipulationsmöglichkeiten. Auch wird die Funktionstüchtigkeit des Gerätes erhöht, wenn keine zusätzlichen Elemente am Gehäuse angebracht wird.

Anstelle des Geräteschalters könnte auch ein Münzeinwurf vorgesehen sein, so daß das System erst nach Einwurf einer bestimmten Münzenzahl für eine bestimmte Zeit aktiviert wird.

Wie aus der vorangehenden Beschreibung ersichtlich, schlägt die Erfindung ein System zur automatischen Abwicklung von Turnieren vor, bei dem durch die Verwendung maschinell lesbarer Datenträger als alleiniges Eingabemedium ein erhöhtes Maß an Sicherheit einerseits und Flexibilität andererseits erzielt wird. Eine Person als Turnierleiter ist nicht mehr erforderlich. Fehlerhafte Eingaben und Manipulationen, wie sie sehr leicht über ein Tastenfeld erfolgen können werden mit Sicherheit vermieden, was dann von besonderer Bedeutung ist, wenn die erfindungsgemäßen Geräte in Spielhallen oder dgl. aufgestellt werden.

Obwohl bei dem bevorzugten erfindungsgemäßen System Kartenvorrichtungen nur mit Lesefähigkeit eingesetzt werden, ist bei einer alternativen Ausführungsform auch die Verwendung von Lese/Schreibvorrichtungen in Betracht zu ziehen. Hierzu kann beispielsweise bei Beendigung eines Turniers auf der Teilnehmerkarte diese Tatsache vermerkt oder eine darauf gespeicherte Qualifikationsnummer geändert werden.

## Patentansprüche

1. System zum automatischen Abwickeln von Turnieren unter Verwendung einer programmgesteuerten Recheneinheit, umfassend:
- maschinell lesbare, vorzugsweise kartenförmige Datenträger für jeden Turnierteilnehmer und für Steuerdaten für jede durchzuführende Turnierart,
- mindestens eine Lesevorrichtung (14, 16) für die kartenförmigen Datenträger, über die ausschließlich die Eingabe von Teilnehmerdaten und Steuerdaten in die Recheneinheit (12) erfolgt, und
- mindestens eine Anzeigevorrichtung (18, 20), die mit der Recheneinheit (12) zur Anzeige von Turnierdaten verbunden ist, dadurch gekennzeichnet, daß die einzelnen Phasen der Turnierabwicklung streng durch die Reihenfolge der jeweils in die Lesevorrichtung(en) (14, 16) eingeführten Datenträger bestimmt sind.

2. System nach Anspruch 1, dadurch gekennzeichnet, daß die Recheneinheit (12) und die Lesevorrichtung(en) (14, 16) in einem gemeinsamen geschlossenen Gehäuse (10) untergebracht sind, das im wesentlichen lediglich einen Einführschlitz für jede Lesevorrichtung (14, 16) aufweist.

3. System nach Anspruch 2, dadurch gekennzeichnet, daß auch die Anzeigevorrichtung (18) in dem Gehäuse (10) integriert ist.

4. System nach einem der vorhergehenden Ansprüche, dadurch gekennzeichnet, daß mindestens eine Anzeigevorrichtung (22) eine Fernanzeigevorrichtung ist, die am jeweiligen Turnierplatz angeordnet ist.

5. System nach einem der vorhergehenden Ansprüche, dadurch gekennzeichnet, daß mit der Recheneinheit (12) auch ein Drucker (22) verbunden ist, der ggfs. in dem Gehäuse integriert ist.

6. System nach einem der vorhergehenden Ansprüche gekennzeichnet durch eine Datenträgeridentifikationsvorrichtung zur Feststellung der Datenträgerart, die mit der Recheneinheit (12) verbunden oder in dieser integriert ist, wobei die Recheneinheit ein Einlesen der Daten von einem eingeführten Datenträger nur dann zuläßt, wenn ein der jeweiligen Ablaufphase zugeordneter Datenträger in die Lesevorrichtung(en) (14, 16) eingeführt wurde, andernfalls den Datenträger aus der Lesevorrichtung (14, 16) auswirft.

7. Systen nach einem der vorhergehenden Ansprüche, dadurch gekennzeichnet, daß die Auswahl und Initiierung einer Turnierart in einem ersten Schritt durch Einführen des der gewünschten Turnierart entsprechenden Steuerdatenträgers erfolgt und daß erst dann nacheinander die Datenträger der Teilnehmer zur Eingabe der Teilnehmerdaten in die Recheneinheit (12) in die Lesevorrichtung(en) (14, 16) eingeführt werden.

8. System nach Anspruch 7, dadurch gekennzeichnet, daß die Eingabe eines Spielergebnisses durch zusammenhängendes Einführen der beiden Teilnehmerdatenträger eines Spielerpaares erfolgt, wobei bei Vorhandensein zweier Lesevorrichtungen (14, 16) die eine für die Einführung des Datenträgers des Gewinners und die andere desjenigen des Verlierers dient, bzw. bei nur einer Lesevorrichtung (14) zuerst der Datenträger des Gewinners und dann derjenige des Verlierers eingeführt wird.

9. System nach einem der vorhergehenden Ansprüche, gekennzeichnet durch einen Ausschlußdatenträger, durch den beim Einführen im Zusammenhang mit einem Teilnehmerdatenträger dieser Teilnehmer in der Recheneinheit (12) gelöscht, d. h. vom Turnier gestrichen wird.

10. System nach einem der vorhergehenden Ansprüche, gekennzeichnet durch eine am Gehäuse (10) angebrachte Münzeneinwurf- und Sammelvorrichtung, über die in Zusammenarbeit mit der Recheneinheit (12) das System ggfs. für eine bestimmte Zeitperiode aktivierbar ist.

11. System nach einem der vorhergehenden Ansprüche, dadurch gekennzeichnet, daß nach Beendigung eines Turniers die Anzeigevorrichtung (18, 20) zur Anzeige des Turnierergebnisses für eine bestimmte Zeitperiode erhalten bleibt und daß sich dann die Recheneinheit (12) unter Löschen der mit dem beendeten Turnier zusammenhängenden Daten rückstellt.

12. System nach einem der vorhergehenden Ansprüche, gekennzeichnet durch Leuchtanzeigen, die vorzugsweise neben dem (den) Einführschlitz(en) für die Lesevorrichtung(en) (14, 16) zur Aufforderung des Einführens von der jeweiligen Phase des Ablaufs entsprechenden Datenträgern dienen.

13. System nach einem der vorhergehenden Ansprüche, gekennzeichnet durch am Gehäuse (10) angebrachte Wählvorrichtungen für eine von mehreren gewünschten Turnierarten anstelle oder zusätzlich zu dem Steuerdaten enthaltenden Datenträger.

14. Verfahren zum Abwickeln eines Turniers unter Verwendung eines Systems nach einem der vorhergehenden Ansprüche, gekennzeichnet durch die folgenden Schritte:
a) Einführen eines Steuerdaten enthaltenden Datenträgers in eine Lesevorrichtung (14, 16);
b) Prüfen der Datenträgerart durch die Recheneinheit (12);
c) Einführen von Teilnehmerdaten enthaltenden Datenträgern in die Lesevorrichtung(en) (14, 16) und Aufnehmen der Teilnehmerdaten durch die Recheneinheit (12);
d) Bestimmen der Paarungen der ersten Turnierrunde durch die Recheneinheit (12) und Anzeigen derselben auf der Anzeigevorrichtung (18, 20);
e) Einführen der Teilnehmerdatenträger des Gewinners und des Verlierers in bestimmter Zuordnung zu der (den) Lesevorrichtung(en) (14, 16);
f) Anzeigen des Turnierergebnisses auf der Anzeigevorrichtung (18, 20) unter Steuerung durch die Recheneinheit (12); und
g) ggfs. Ausdrucken des Turnierergebnisses durch die Druckvorrichtung (22) unter Steuerung durch die Recheneinheit (12).

15. Verfahren nach Anspruch 14, dadurch gekennzeichnet, daß ein in eine Lesevorrichtung (14, 16) eingeführter, der jeweiligen Phase des Ablaufs nicht entsprechender Datenträger erkannt und ausgeworfen wird.

## Claims

1. A system for automated running of sports contests, using a program-controlled computer unit, comprising:
- machine-readable, preferably card-shaped data carriers for each contestant and for control data for each type of contest to be performed;
- at least one reader (14, 16) for the card-shaped data carriers, by means of which contestant data and control data are exclusively input into said computer unit (12); and
- at least one display device (18, 20) linked to said computer unit (12) for displaying contest data,
characterized in that
the individual phases of the contest running are strictly determined by the sequence of the respective data carriers introduced in said reader(s) (14, 16).

2. The system of claim 1, characterized in that said computer unit (12) and said reader(s) (14, 16) are accommodated within a common closed housing (10), substantially only comprising an insertion slot for each reader (14, 16).

3. The system of claim 2, characterized in that said display device (18) is also integrated in said housing (10).

4. A system of any of the preceding claims, characterized in that at least one display device (22) is a tele-indicating device arranged at the respective contest location.

5. A system of any of the preceding claims, characterized in that said computer unit (12) has also linked thereto a printer (22) integrated in the housing, if desired.

6. A system of any of the preceding claims, characterized by a data carrier identification device for detecting the type of data carrier linked to or integrated in said computer unit (12), the computer unit only permitting data to be read from an introduced data carrier, if a data carrier associated to the corresponding phase of operation was inserted in said reader(s) (14, 16), if not, ejecting the data carrier from said reader (14, 16).

7. A system of any of the preceding claims, characterized in that a type of contest is selected and started in a first step by introducing the control data carrier corresponding to the desired type of contest, and only then, the contestants' data carriers are inserted in said reader(s) (14, 16), one after another, to enter the contestant data to said computer unit (12).

8. The system of claim 7, characterized in that the input of a contest result is performed by continuously introducing the two contestant data carriers of a pair of contestants, wherein, if there are two readers (14, 16), one thereof is determined to have introduced the data carrier of the winner and the other one that of the loser or, if there is only one reader (14), respectively, at first the data carrier of the winner and then that of the loser is introduced.

9. A system of any of the preceding claims, characterized by an excluding data carrier erasing a contestant in said computer unit (12), if the excluding data carrier is inserted in connection with a contestant data carrier, i. e. the contestant is excluded from the contest.

10. A system of any of the preceding claims, characterized by a coin introduction and collection device provided at said housing (10), through which device the system may be activated in cooperation with said computer unit (12), for a predetermined period of time, if desired.

11. A system of any of the preceding claims, characterized in that after termination of a contest, said display device (18, 20) remains active to display the contest result for a predetermined period of time, and then said computer unit (12) resets by erasing the data corresponding to the terminated contest.

12. A system of any of the preceding claims, characterized by indicating lights, preferably located near the insertion slot(s) for said reader(s) (14, 16) to demand the insertion of data carriers corresponding to the respective phase of operation.

13. A system of any of the preceding claims, characterized by selecting means provided at said housing (10), for selecting one of several desired types of contest instead of or in addition to the data carrier containing control data.

14. A process for running of a sports contest by using a system of any of the preceding claims, characterized by the following steps:
a) introducing a data carrier containing control data in a reader (14, 16);
b) verifying the type of data carrier by said computer unit (12);
c) introducing data carriers containing contestant data in said reader(s) (14, 16), and recording the contestant data by said computer unit (12);
d) determining the teams of the first contest round by said computer unit (12), and indicating them on said display device (18, 20);
e) inserting the contestant data carriers of the winner and the loser in a predetermined association to said reader(s) (14, 16);
f) displaying the contest result on said display device (18, 20) under control of said computer unit (12); and
g) printing, if desired, the contest result by said printing device (22), under control of said computer unit (12).

15. The process of claim 14, characterized in that a data carrier introduced in a reader (14, 16), but not corresponding to the respective phase of operation, is recognized and ejected.

## Revendications

1. Système pour le déroulement automatique de tournois en utilisant une unité de calcul commandée par programme, comprenant :
- des supports de données pouvant être lus mécaniquement, de préférence sous forme de cartes, pour chaque participant au tournoi et pour des données de commande pour chaque type de tournoi à effectuer,
- au moins un dispositif de lecture (14, 16) pour les supports de données en forme de cartes, par l'intermédiaire exclusif duquel s'effectue l'introduction de données de participants et de données de commande dans l'unité de calcul (12), et
- au moins un dispositif d'affichage (18, 20), qui est relié à l'unité de calcul (12) pour afficher les données du tournoi,
**caractérisé** en ce que les différentes phases du déroulement du tournoi sont strictement déterminées par la succession des supports de données chaque fois introduits dans le ou les dispositifs de lecture (14, 16).

2. Système selon la revendication 1, **caractérisé** en ce que l'unité de calcul (12) et le ou les dispositifs de lecture (14, 16) sont logés dans un boîtier fermé commun (10), qui présente pour l'essentiel uniquement une fente d'introduction pour chaque dispositif de lecture (14, 16).

3. Système selon la revendication 2, **caractérisé** en ce que le dispositif d'affichage (18) est également intégré dans le boîtier (10).

4. Système selon une des revendications précédentes, **caractérisé** en ce qu'au moins un dispositif d'affichage (22) est un dispositif d'affichage à distance, qui est disposé sur le lieu de compétition respectif.

5. Système selon une des revendications précédentes, **caractérisé** en ce qu'une imprimante (22), qui est éventuellement intégrée dans le boîtier, est également reliée à l'unité de calcul (12).

6. Système selon une des revendications précédentes, **caractérisé** par un dispositif d'identification de support de données pour déterminer le type de support de données, dispositif qui est relié à l'unité de calcul (12) ou est intégré dans cette dernière, l'unité de calcul n'autorisant la lecture des données d'un support de données introduit que si un support de données associé à la phase de déroulement respective a été introduit dans le ou les dispositifs de lecture (14, 16), faut de quoi le support de données est rejeté du dispositif de lecture (14, 16).

7. Système selon une des revendications précédentes, **caractérisé** en ce que le choix et l'initialisation d'un type de tournoi s'effectuent lors d'une première étape par introduction du support de données de commande correspondant au type souhaité de tournoi, et en ce qu'ensuite seulement les supports de données des participants sont successivement introduits dans le ou les dispositifs de lecture (14, 16) afin d'introduire les données de participants dans l'unité de calcul (12).

8. Système selon la revendication 7, **caractérisé** en ce que l'introduction du résultat d'une partie s'effectue par l'introduction corrélée des deux supports de données de participants d'une paire de joueurs, de telle sorte qu'en présence de deux dispositifs de lecture (14, 16), l'un sert à l'introduire le support de données du vainqueur et l'autre celui du perdant, tandis qu'en présence d'un seul dispositif de lecture (14), on introduit d'abord le support de données du vainqueur puis celui du perdant.

9. Système selon une des revendications précédentes, **caractérisé** par un support de données d'exclusion par lequel, lorsqu'il est introduit en corrélation avec un support de données de participant, ce participant est effacé dans l'unité de calcul (12), c'est-à-dire éliminé du tournoi.

10. Système selon une des revendications précédentes, **caractérisé** par un dispositif récepteur et collecteur de pièces de monnaie, qui est monté sur le boîtier (10) et au moyen duquel, en collaboration avec l'unité de calcul (12), le système peut être activé éventuellement pendant une durée donnée.

11. Système selon une des revendications précédentes, **caractérisé** en ce qu'à l'achèvement d'un tournoi, le dispositif d'affichage (18, 20) est maintenu pendant une durée donnée pour afficher le résultat du tournoi, et en ce que l'unité de calcul (12) se remet ensuite à l'état initial en effaçant les données corrélées au tournoi achevé.

12. Système selon une des revendications précédentes, **caractérisé** par des voyants lumineux qui, disposés de préférence à côté de la ou des fentes d'introduction pour le ou les dispositifs de lecture (14, 16), servent à inviter à introduire des supports de données qui correspondent à la phase respective du déroulement.

13. Système selon une des revendications précédentes, **caractérisé** par des dispositifs sélecteurs montés sur le boîtier (10) pour l'un de plusieurs types souhaités de tournois, au lieu ou en plus du support de données contenant des données de commande.

14. Procédé pour le déroulement d'un tournoi en utilisant un système selon une des revendications précédentes, **caractérisé** par les étapes suivantes :
a) introduction dans un dispositif de lecture (14, 16) d'un support de données contenant des données de commande ;
b) contrôle du type de support de données par l'unité de calcul (12) ;
c) introduction dans le ou les dispositifs de lecture (14, 16) de supports de données contenant des données de participants, et enregistrement des données de participants par l'unité de calcul (12) ;
d) détermination des paires du premier tour du tournoi par l'unité de calcul (12), et affichage de ces paires sur le dispositif d'affichage (18, 20) ;
e) introduction des supports de données de participants du vainqueur et du perdant dans une association donnée au(x) dispositif(s) de lecture (14, 16) ;
f) affichage du résultat du tournoi sur le dispositif d'affichage (18, 20) sous la commande de l'unité de calcul (12) ; et
g) impression éventuelle du résultat du tournoi par le dispositif d'impression (22) sous la commande de l'unité de calcul (12).

15. Procédé selon la revendication 14, **caractérisé** en ce qu'un support de données, introduit dans un dispositif de lecture (14, 16), qui ne correspond pas à la phase respective du déroulement est reconnu et rejeté.
